# EUROPEAN PATENT SPECIFICATION

(11) **EP 1 566 755 B1**
(45) Date of publication and mention of the grant of the patent: **06.01.2010**
(21) Application number: 05003394.3
(22) Date of filing: 17.02.2005
(51) Int. Cl.: G06Q 10/00, G06Q 30/00, G07G 1/00, G06K 19/00

(54) **Article price management system**
System zur Verwaltung von Artikelverkaufspreisen
Systeme pour la gestion des prix d'articles

(30) Priority: 19.02.2004 JP 2004042833; 10.12.2004 JP 2004358966
(43) Date of publication of application: 24.08.2005
(73) Proprietor: Toshiba TEC Kabushiki Kaisha, Tokyo 141-8664 (JP)
(72) Inventor: ENDO, Nobuhiro Intell. Prop. Div. Toshiba Tec K.K., Tokyo 141-8664 (JP)
(74) Representative: Kramer - Barske - Schmidtchen

(56) References cited:
- WO-A-01/33526
- WO-A-02/063602
- US-A- 5 151 684
- US-A- 5 995 015

## Description

This invention relates to an article price management system which, by use of a server, manages the selling price of articles to which radio tags are respectively attached.

In Jpn. Pat. Appln. KOKAI Publication No. H10-49756, the following system is disclosed as a system associated with the selling of articles.

In the system, a radio tag in which article information such as an article identification code set for each article is stored is attached to each article. A radio tag reader is connected to a point-of-sales (POS) terminal. The radio tag reader can simultaneously read article information items of radio tags respectively attached to articles of one customer placed on the article placing portion.

When the POS terminal receives the article information of one customer read by the radio tag reader, it acquires the article names and article prices based on the article identification codes of the article information and performs the article sales data registration process.

In the system, the selling prices of the articles are managed by use of an article information file. In the article information file, article information items such as article names and selling prices corresponding to article identification codes of the respective articles are stored.

In a retail shop, the prices of articles are temporarily reduced based on a limited special offer in some cases. In these cases, price-reduction stickers indicating the reduced prices are attached to articles whose prices are to be reduced on the retail shop side. When the cashier confirms an article to which a price-reduction sticker is attached from the articles of one customer placed on the article placing portion, he operates the price-reduction key of the POS terminal to input a price-reduction amount indicated by the sticker. However, in this method, an unwanted working load is imposed on the cashier and there occur problems that he may forget to perform the price-reduction operation, he may erroneously input the price-reduction amount and the like.

Another system is described in Jpn. Pat. Appln. KOKAI Publication No. H11-250351.

In the system, an in-store marking barcode containing an amount portion is attached to each article. Further, a radio tag having price-reduction identification data stored therein is attached to each article whose price is to be reduced. A barcode reader and radio tag reader are connected to the POS terminal.

When the barcode of the article is read by use of the barcode reader, the POS terminal determines whether or not price-reduction identification data of the radio tag is read by use of the radio tag reader. If the price-reduction identification data is read, price-reduction data is read out from the conversion table based on the price-reduction identification data. Then, the price-reduction data is subtracted from the amount portion and barcode data is thus changed. The POS terminal performs the registration process for an article based on the thus changed barcode.

However, in the system, a clerk is required to attach a radio tag in which price-reduction identification data corresponding to the price-reduction contents is stored to the article whose price is to be reduced at the start time and end time of a limited special offer only for a certain period. Therefore, an unwanted operational load will be imposed on the clerk. Further, there still occurs a problem that the clerk will forget to attach a radio tag or he may attach a radio tag having erroneous price-reduction identification data stored therein.

In another system, the selling prices of respective articles are managed by use of an article information file. Each time the price of an article is changed, the price information stored and managed by use of the article information file is changed. For example, assume that a limited special offer in which the price of an article A is reduced to a special sale price for a period from 15:00 to 16:00 is provided. In this case, the price of the article A stored in the article information file is changed to the special sale price at 15:00 and returned to the original price at 16:00. Thus, a manual input operation for price-reduction data, price-reduction sticker attaching operation and the like are not required.

According to the above system, if the article A is registered in the period from 15:00 to 16:00 by the POS terminal, it is processed at the special sale price. That is, the customer can enjoy the benefit of the special offer only for a certain period. However, if the article A is registered after 16:00 by the POS terminal, it is processed at the normal selling price even if the customer got the article A before 16:00. That is, the customer cannot be given a benefit of the special offer only for a certain period.

WO 01/33526, WO 02/063602 and US 5,151,684 disclose a system according to the preamble of claim 1.

Accordingly, it is necessary to provide an article price management system which can correctly manage a change of the price of an article whose price is changed according to a certain period and permit the article to be adequately sold without imposing an additional load on a clerk.

This is achieved by the present invention as defined in claim 1. Further advantageous embodiments of the invention are defined in the dependent claims.

The invention can be more fully understood from the following detailed description when taken in conjunction with the accompanying drawings, in which:
FIG. 1 is a view showing an article display rack used in one embodiment of the present invention;
FIG. 2 is a block diagram showing the configuration of a main portion of a radio tag used in one embodiment of the present invention;
FIG. 3 is a diagram showing the whole configuration of a retail shop system in one embodiment of the present invention;
FIG. 4 is a diagram showing the data structure of a rack management file which the controller of a radio tag reader/writer has in a first embodiment of this invention;
FIG. 5 is a diagram showing the data structure of an article file which the store server has in the first embodiment;
FIG. 6 is a diagram showing the data structure of a price change file which the store server has in the first embodiment;
FIG. 7 is a flowchart showing the main portion of a price change process executed by the store server in the first embodiment;
FIG. 8 is a flowchart showing the main portion of a reception process executed by the controller in the first embodiment;
FIG. 9 is a flowchart showing the main portion of a reception process executed by the radio tag reader/writer in the first embodiment;
FIG. 10 is a flowchart showing the main portion of a reception process executed by the radio tag in the first embodiment;
FIG. 11 is a flowchart showing the main portion of a tag reading process executed by a POS terminal in the first embodiment;
FIG. 12 is a diagram showing the data structure of an article file in a second embodiment of this invention;
FIG. 13 is a diagram showing data items stored in the radio tag in the second embodiment;
FIG. 14 is a diagram showing the data structure of a price change file in the second embodiment;
FIG. 15 is a flowchart showing the main portion of a price change process executed by the store server in the second embodiment;
FIG. 16 is a flowchart showing the main portion of a reception process executed by the controller in the second embodiment;
FIG. 17 is a flowchart showing the main portion of a reception process executed by the radio tag reader/writer in the second embodiment;
FIG. 18 is a flowchart showing the main portion of a reception process executed by the radio tag in the second embodiment; and
FIG. 19 is a flowchart showing the main portion of a tag reading process executed by a POS terminal in the second embodiment.

There will now be described preferable embodiments of this invention with reference to the accompanying drawings.

In the above embodiments, a case wherein this invention is applied to a retail shop such as a supermarket which provides a limited special offer is explained. The limited special offer is to sell specified articles whose prices are reduced in an adequately selected period during business hours.

First, the first embodiment is explained.

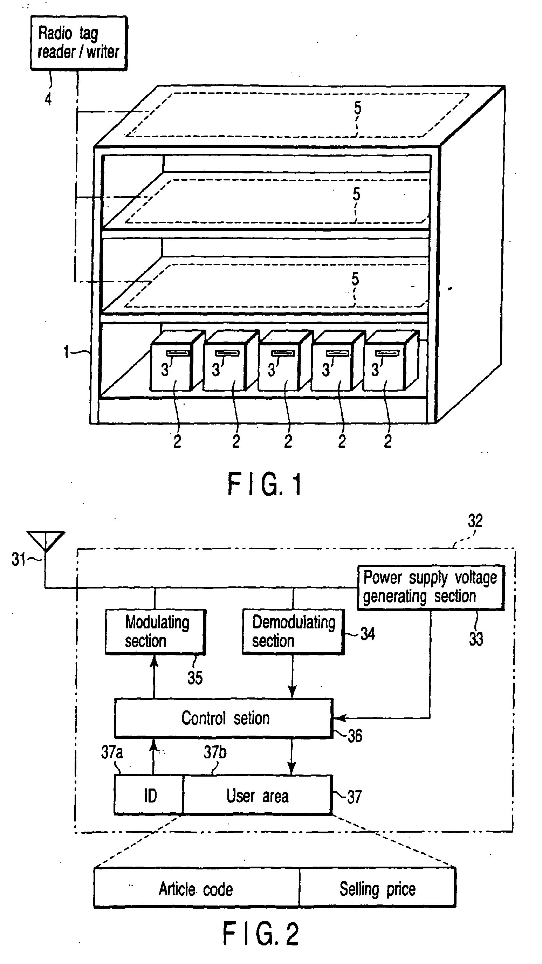

An article display rack 1 placed in a salesroom of the retail shop is shown in FIG. 1. Various articles 2 are displayed on the article display rack 1. A radio tag 3 is attached to each of the articles 2. A radio tag reader/writer 4 is provided on the article display rack 1. The radio tag reader/writer 4 can read out information from the memory of the radio tag 3 by means of a radio signal. Also, the radio tag reader/writer 4 can write information into the memory of the radio tag 3 by means of a radio signal.

The radio tag 3 is a non-contact type communication medium called radio-frequency-identification (RFID), IC tag, ID tag or transponder. A plurality of antennas 5 are arranged in their respective rack plates of the article display rack 1. The radio communication distance of each antenna 5 is set to approximately 10 cm. The radio tags 3 of all of the articles 2 displayed on the article display rack 1 are set within a communication area of the radio tag reader/writer 4.

FIG. 2 is a block diagram showing the configuration of a main portion of the radio tag 3. The radio tag 3 has an antenna 31 and LSI chip 32. The LSI chip 32 includes a power supply voltage generating section 33, demodulating section 34, modulating section 35, control section 36 and nonvolatile memory 37.

The power supply voltage generating section 33 rectifies and stabilizes a modulated signal received by the antenna 31 and supplies the power supply voltage to the respective sections of the LSI chip 32.

The demodulating section 34 demodulates the modulated signal and transmits the demodulated signal to the control section 36. The modulating section 35 modulates data supplied from the control section 36 and supplies the modulated data to the antenna 31.

The control section 36 writes data demodulated by the demodulating section 34 into the memory 37. Further, the control section 36 reads out transmission data from the memory 37 and supplies the data to the modulating section 35.

In the nonvolatile memory 37, an ID area 37a and user area 37b into which the user can write desired data are formed. In the ID area 37a, an inherent ID assigned and set by the maker at the manufacturing stage of the radio tag 3 is stored. In the user area 37b, the selling price and article code set for the article 2 to which the radio tag 3 is attached are stored.

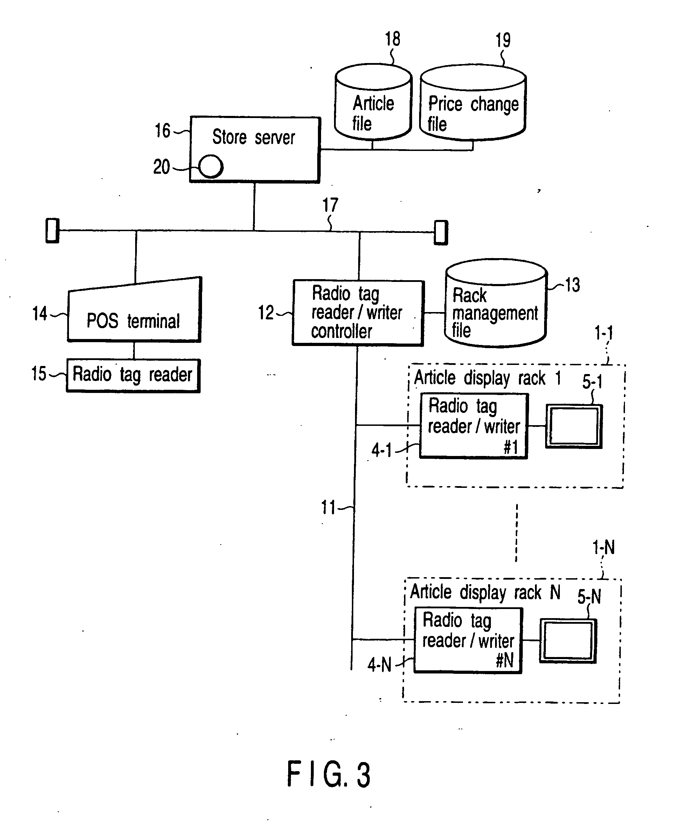

FIG. 3 is a configuration diagram of a system configured in a retail shop. In a salesroom, a plurality N (N ≥ 2) of article display racks 1-1 to 1-N are arranged. On the respective article display racks 1-1 to 1-N, radio tag readers/writers 4-1 to 4-N and antennas 5-1 to 5-N are provided.

The radio tag readers/writers 4-1 to 4-N are connected to a controller 12 via a communication line 11. The operations of the radio tag readers/writers 4-1 to 4-N for reading information from the radio tag 3 and writing information into the radio tag 3 are controlled by the controller 12.

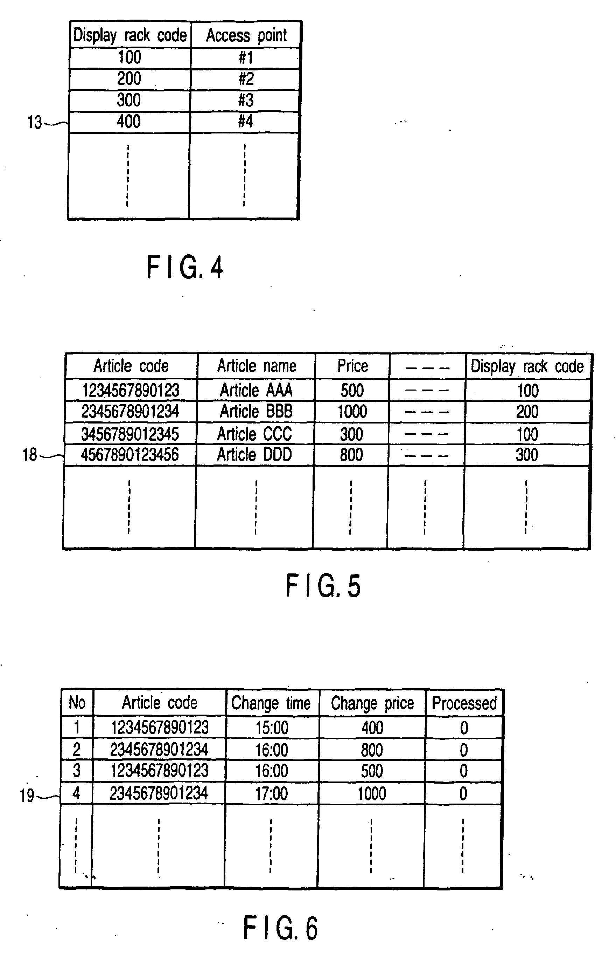

In a storage section provided inside or outside the controller 12, a rack management file 13 is stored. As shown in FIG. 4, in the rack management file 13, access point codes are previously stored in correspondence to display rack codes. The display rack code is a location identification code set for each of the article display racks 1-1 to 1-N. The access point code is an identification code set for each of the radio tag readers/writers 4-1 to 4-N.

A POS terminal 14 which is used to perform the registering process for sales information of articles is installed in the accounting section of the retail shop. A radio tag reader 15 is connected to the POS terminal 14. The radio tag reader 15 collectively reads article information items of the radio tags 3 respectively attached to articles of one customer placed on the article placing portion of the accounting section.

In the management office of the retail shop, a store server 16 for centralized control of the shop business is installed. In the store server 16, the controller 12 and POS terminal 14 are connected to each other via a communication line 17 such as a local-area-network (LAN).

The store server 16 transmits control data for the radio tag readers/writers 4-1 to 4-N to the controller 12. The store server 16 receives sales information of articles registered in the POS terminal 14 and manages sales data based on the received sales information.

An article file 18 and price change file 19 are stored in a storage section which is provided inside or outside the store server 16. As shown in FIG. 5, names, normal prices, display rack codes and the like of articles are previously stored in the article file 18 in correspondence to article codes which are article identification codes of the respective articles. The display rack code is a code used to specify one of the article display racks 1 on which the article is displayed. As shown in FIG. 6, information items of articles whose prices are to be changed according to limited special offers are stored in the price change file 19 in the order in which the prices will be changed at earlier times. The information contains an article code, price-change time, price obtained after the price change, and a processing flag indicating whether the price has been changed or not.

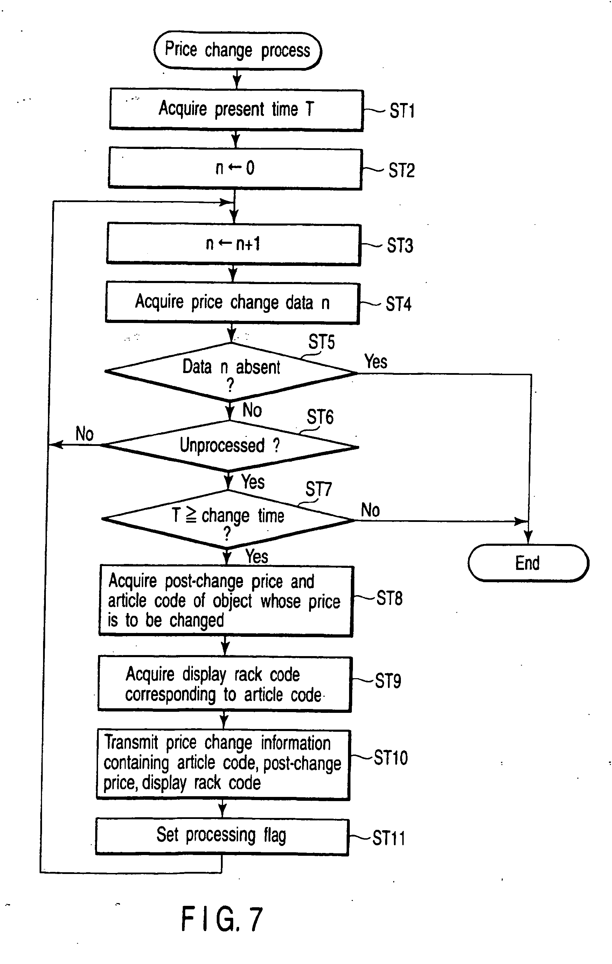

A clock 20 which counts the present time is contained in the store server 16. Each time the clock 20 counts a preset period (for example, one minute), the price change process shown in the flowchart of FIG. 7 is performed.

The store server 16 reads the present time T counted by the clock 20 (ST1). The store server 16 resets a file number counter n to zero (ST2).

The store server 16 increments the file number counter n by 1 (ST3). The store server 16 reads out price change data (article code, price-change time, price obtained after the price change, processing flag) of No. n (n is the count of the file number counter) from the price change file 19 (ST4). If the price change data of No. n cannot be read from the price change file 19 (ST5), the price change process is terminated.

If the price change data of No. n can be read from the price change file 19 (ST5), the store server 16 checks the processing flag of the data. At this time, if it is detected that the processing flag is "1" indicating that the process has been performed (ST6), the store server 16 further increments the file number counter n by 1 (ST3) and performs the same process.

If it is detected that the processing flag is "0" indicating that the process has not been performed (ST6), the store server 16 compares the price-change time of the data with the present time T (ST7). As a result, if it is determined that the present time T does not reach the price-change time, the price change process is terminated.

If it is determined that the present time T has reached or exceeds the price-change time, the store server 16 acquires an article code and change price from the price change data of No. n (ST8).

The store server 16 searches the article file 18 to acquire a display rack code which is set in correspondence to the article code (ST9). Then, the store server 16 forms price change information containing the article code, price obtained after the price change and display rack code. The store server 16 transmits the price change information to the controller 12 via the communication line 17 (ST10).

The store server 16 sets the processing flag of the price change data of No. n to "1" (ST11). The store server 16 further increments the file number counter n by 1 (ST3) and performs the same process.

If the store server 16 reads price change data in which the price-change time after the present time T is set, the price change process is terminated. Alternatively, if the store server 16 cannot read price change data of No. n from the price change file 19, the price change process is terminated.

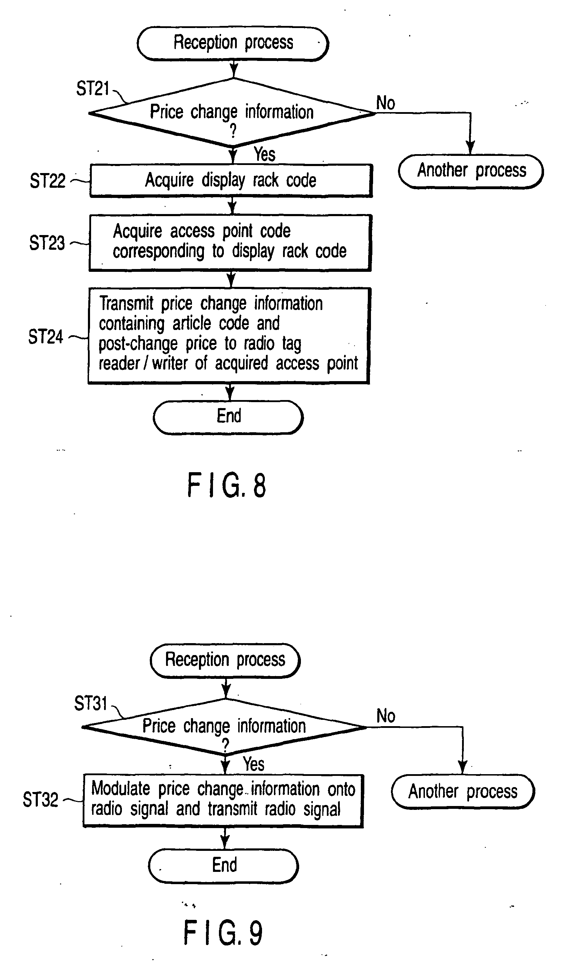

The controller 12 communicates with the store server 16 via the communication line 17. When receiving the price change information from the store server 16, the controller 12 performs the reception process shown in the flowchart of FIG. 8.

The controller 12 determines whether information received via the communication line 17 is price change information or not (ST21). In the case of price change information, a display rack code is acquired from the price change information (ST22). The controller 12 searches the rack management file 13 by use of the display rack code to acquire an access point code corresponding to the display rack code.

The controller 12 selects the radio tag reader/writer 4-i (1 ≤ i ≤ N) in which the above access point code is set (ST23). The controller 12 transfers price change information (article code, price obtained after the price change [post-change price]) except the display rack code to the radio tag reader/writer 4-i (ST24). Thus, the reception process is terminated.

When receiving price change information from the controller 12 via the communication line 17, each of the radio tag readers/writers 4-1 to 4-N performs the reception process shown in the flowchart of FIG. 9.

Each of the radio tag readers/writers 4-1 to 4-N determines whether or not information received via the communication line 17 is price change information (ST31). If it is the price change information, each' of the radio tag readers/writers 4-1 to 4-N modulates the price change information onto a radio signal and transmits the radio signal from a corresponding one of the antennas 5-1 to 5-N (ST32). Thus, the reception process is terminated.

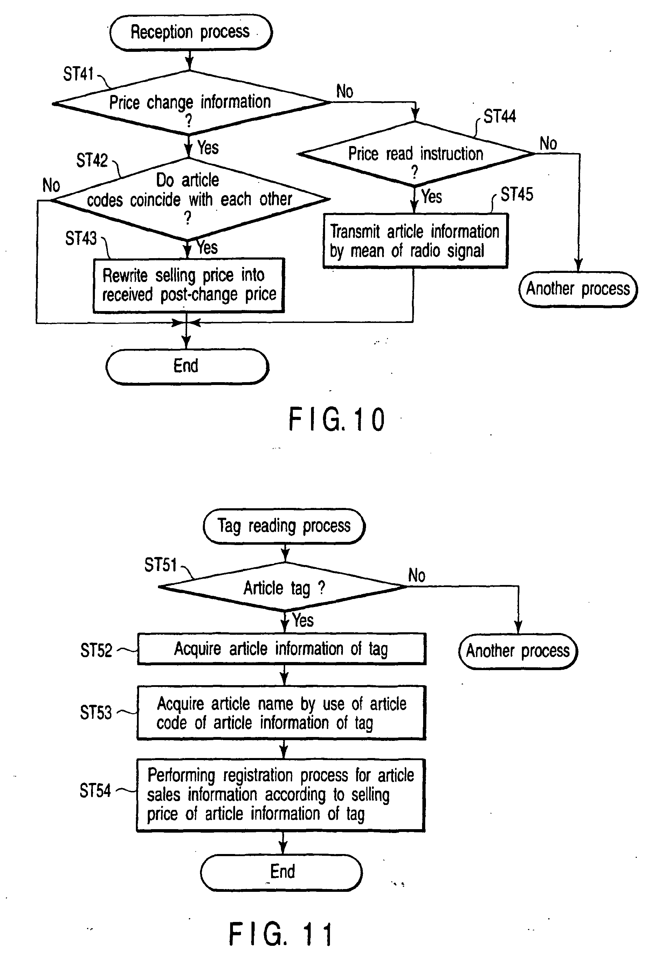

When the radio signal is received by the antenna 31, the radio tag 3 performs the reception process shown in the flowchart of FIG. 10.

The radio tag 3 demodulates the received radio signal. If the demodulated received radio signal corresponds to price change information (ST41), the radio tag 3 determines whether or not the article code in the information coincides with the article code stored in the memory 37 (ST42). When the article codes coincide with each other, the radio tag 3 rewrites the selling price stored in the memory 37 to a post-change price in the price change information (ST43). If the article codes do not coincide with each other, the reception process is terminated.

If the demodulated received radio signal corresponds to a price reading instruction (ST44), the radio tag 3 reads out article information of an article code and selling price stored in the memory 37. The price reading instruction is generated from the radio tag reader 15 connected to the POS terminal 14. The radio tag 3 modulates article information read from the memory 37 onto a radio signal and transmits the radio signal from the antenna 31 (ST45). Thus, the reception process is terminated.

The POS terminal 14 has the radio tag reader 15. The radio tag reader 15 reads a selling price, article code and the like stored in the memory 37 of the radio tag 3 attached to the article. If information stored in the memory 37 of the radio tag 3 is read by means of the radio tag reader 15, the POS terminal 14 performs the tag reading process shown in the flowchart of FIG. 11.

The POS terminal 14 determines whether or not information of the radio tag 3 read by use of the radio tag reader 15 is equal to information stored in the memory 37 of the radio tag 3 attached to the article 2 (ST51). If it is the information stored in the memory 37 of the radio tag 3, the POS terminal 14 acquires an article code and selling price from the information (ST52).

The POS terminal 14 makes an inquiry at the store server 16 by use of the article code to acquire an article name set corresponding to the article code in the article file 18 (ST53). Further, the POS terminal 14 performs the registration process for sales information of the article whose article name is set based on the selling price acquired from the radio tag 3 (ST54). Thus, the tag reading process is terminated.

As can be clearly understood from the above explanation, the radio tag readers/writers 4-1 to 4-N are respectively provided on the plurality of article racks 1-1 to 1-N. The radio tag 3 is attached to each of the articles 2. The selling price and article code of an article to which the tag 3 is attached are stored in the radio tag 3. The radio tag reader 15 is connected to the POS terminal 14.

When all of the articles 2 which are purchased by the customer are placed on the article placing section, article information items of the radio tags 3 attached to the respective articles 2 are read by the radio tag reader 15 and input to the POS terminal 14. Then, the POS terminal 14 performs the registration process for sales information items of the respective articles by use of the selling prices of the article information items received from the radio tag reader 15.

The radio tag readers/writers 4-1 to 4-N are connected to the controller 12. The controller 12 is connected to the store server 16. In the controller 12, the rack management file 13 is provided. In the store server 16, the article file 18 and price change file 19 are provided.

For example, assume now that data items shown in FIGS. 4 to 6 are set in the files 13, 18 and 19. In this case, if time counted by the clock 20 reaches 15:00, price change information of the article code "1234567890123", post-change price "400" and display rack code "100" is transmitted from the store server 16 to the controller 12.

The controller 12 selects the radio tag reader/writer 4-1 of the access point code "#1" corresponding to the display rack code "100". After this, the price change information of the article code "1234567890123" and post-change price "400" is transmitted to the radio tag reader/writer 4-1. Then, a radio signal indicating the article code "1234567890123" and post-change price "400" is transmitted from the antenna 5-1 of the radio tag reader/writer 4-1.

At this time, if an article 2 of the article code "1234567890123" is displayed on the article display rack 1-1 of the display rack code "100", the selling price stored in the memory 37 of the radio tag 3 attached to the article 2 is rewritten from "500" to "400".

When the time reaches 16:00, price change information of an article code "2345678901234", post-change price "800" and display rack code "200" is transmitted from the store server 16 to the controller 12.

The controller 12 selects the radio tag reader/writer 4-2 of the access point code "#2" corresponding to the display rack code "200". After this, the price change information of the article code "2345678901234" and post-change price "800" is transmitted to the radio tag reader/writer 4-2. Then, a radio signal indicating the article code "2345678901234" and post-change price "800" is transmitted from the antenna 5-2 of the radio tag reader/writer 4-2.

At this time, if an article 2 of the article code "2345678901234" is displayed on the article display rack 1-2 of the display rack code "200", the selling price stored in the memory 37 of the radio tag 3 attached to the article 2 is rewritten from "1000" to the post-change price "800".

Further, at this time, the price change information of the article code "1234567890123", post-change price "500" and display rack code "100" is transmitted from the store server 16 to the controller 12. The controller 12 selects the radio tag reader/writer 4-1 of the access point code "#1" corresponding to the display rack code "100". After this, a radio signal indicating the article code "1234567890123" and post-change price "400" is transmitted from the antenna 5-1 of the radio tag reader/writer 4-1. Thus, the selling price "400" of the radio tag 3 attached to the article 2 of the article code "1234567890123" is returned to "500".

When the time reaches 17:00, price change information of the article code "2345678901234", post-change price "1000" and display rack code "200" is transmitted from the store server 16 to the controller 12. The controller 12 selects the radio tag reader/writer 4-2 of the access point code "#2" corresponding to the display rack code "200". After this, a radio signal indicating the article code "2345678901234" and post-change price "800" is transmitted from the antenna 5-2 of the radio tag reader/writer 4-2. Thus, the selling price "800" of the radio tag 3 attached to the article 2 of the article code "2345678901234" is returned to "1000".

According to the present embodiment, the customer who got the article which is an object of the special offer from the article display rack during the offer time can purchase the article of the reduced price even if the accounts settlement time has exceeded the offer time. Therefore, the reliability of the store can be enhanced.

Further, according to the present embodiment, even if an article placed on a rack of the display code set in the article file 18 and an article placed on another rack are the same type of articles, the price of the former article may be changed, but the price of the latter article is not changed.

For example, in a case where articles whose prices are changed or are not changed according to the number of remaining days to the expiration date are provided, the former articles are displayed on the rack of the display rack code set in the article file 18. The latter articles are displayed on another rack. Thus, only the price of the article whose price is to be changed among the articles of the same type can be changed.

When the system of the present embodiment is used in a shopping center, the server 16 and controller 12 are provided in the developer. The radio tag reader/writer 4 is provided for each tenant. Thus, the price of an article can be changed for each tenant unit.

Next, a second embodiment of this invention is explained. The second embodiment is also applied to a retail shop shown in the system configuration diagram of FIG. 3, and portions which are the same as those of the first embodiment are denoted by the same reference symbols and the detail explanation thereof is omitted.

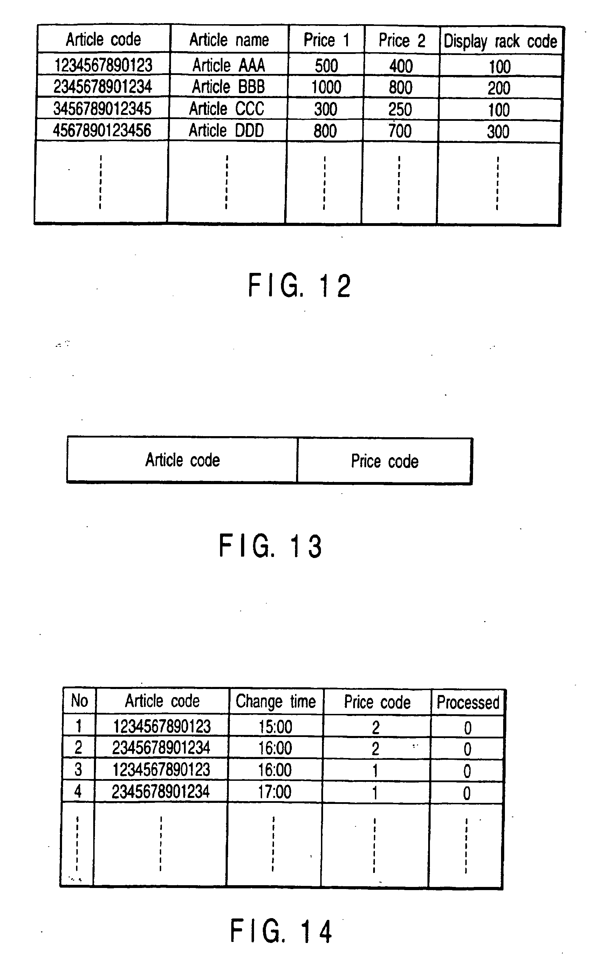

As shown in FIG. 12, in the second embodiment, two types of prices including the normal price and post-change price are stored for each article in an article file 18. In this case, a price code "1" is set for the normal price and a price code "2" is set for the post-change price.

As shown in FIG. 13, in a memory 37 of a radio tag 3 attached to each article, a price code is stored as price information. As shown in FIG. 14, a price code is set instead of the post-change price in a price change file 19.

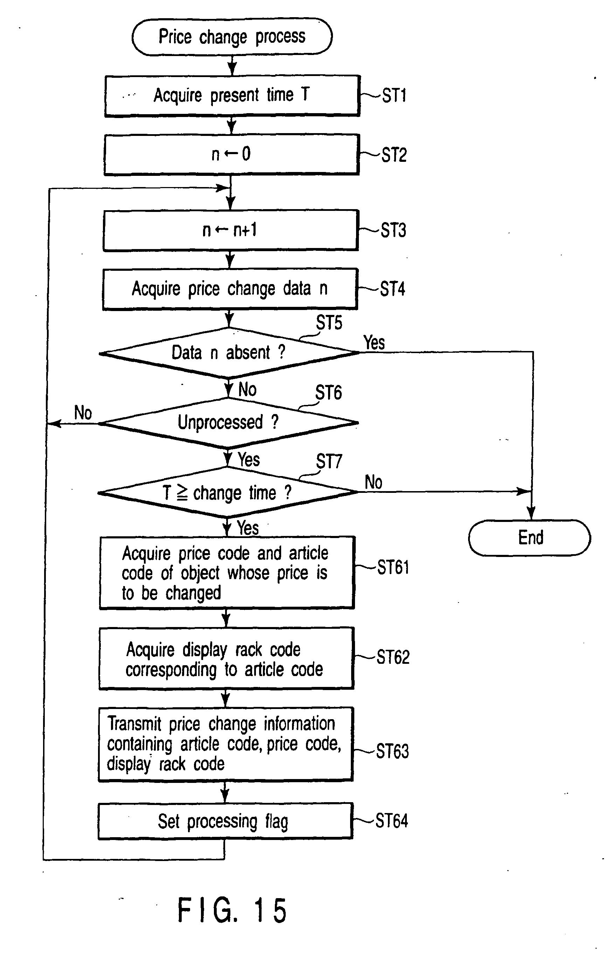

A store server 16 performs the price change process shown in the flowchart of FIG. 15 each time a clock 20 counts a preset period.

The store server 16 performs the following process each time price change data is read from the price change file 19 (ST1 to ST7).

The store server 16 acquires an article code and price code of price change data (ST61). The store server 16 searches the article file 18 to acquire a display rack code set in correspondence to the article code (ST62).

After this, the store server 16 forms price change information containing the article code, price code and display rack code. Then, the store server 16 transmits the price change information to a controller 12 via a communication line 17 (ST63). At this time, the store server 16 sets a processing flag indicating that the price change data has been processed to "1" (ST64).

When the store server 16 reads out price change data in which price-change time after the present time T is set, the process is terminated. Also, when the store server 16 cannot read out price change data from the price change file 19, the process is terminated.

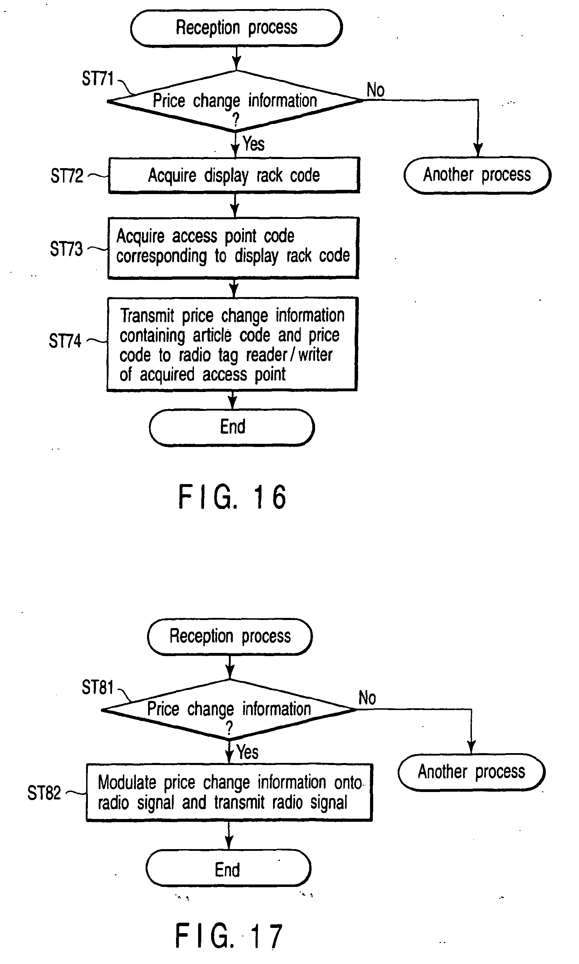

When price change information is received from the store server 16, the controller 12 performs the reception process shown in the flowchart of FIG. 16.

The controller 12 determines whether information received via the communication line 17 is price change information or not (ST71). In the case of price change information ("YES" in step ST71), it acquires a display rack code from the price change information (ST72). Then, the controller 12 searches the rack management file 13 by use of the display rack code to acquire an access point code corresponding to the display rack code.

After this, the controller 12 selects the radio tag reader/writer 4-i (1 ≤ i ≤ N) in which the above access point code is set (ST73). Then, the controller 12 transfers price change information (article code, price code) except the display rack code to the radio tag reader/writer 4-i (ST74). Thus, the reception process is terminated.

When receiving the price change information from the controller 12 via the communication line 11, each of the radio tag readers/writers 4-1 to 4-N performs the reader/writer reception process shown in the flowchart of FIG. 17.

Each of the radio tag readers/writers 4-1 to 4-N determines whether or not information received via the communication line 11 is price change information (ST81). If it is the price change information, each of the radio tag readers/writers 4-1 to 4-N modulates the price change information onto a radio signal and transmits the radio signal from a corresponding one of the antennas 5-1 to 5-N (ST82). Thus, the reception process is terminated.

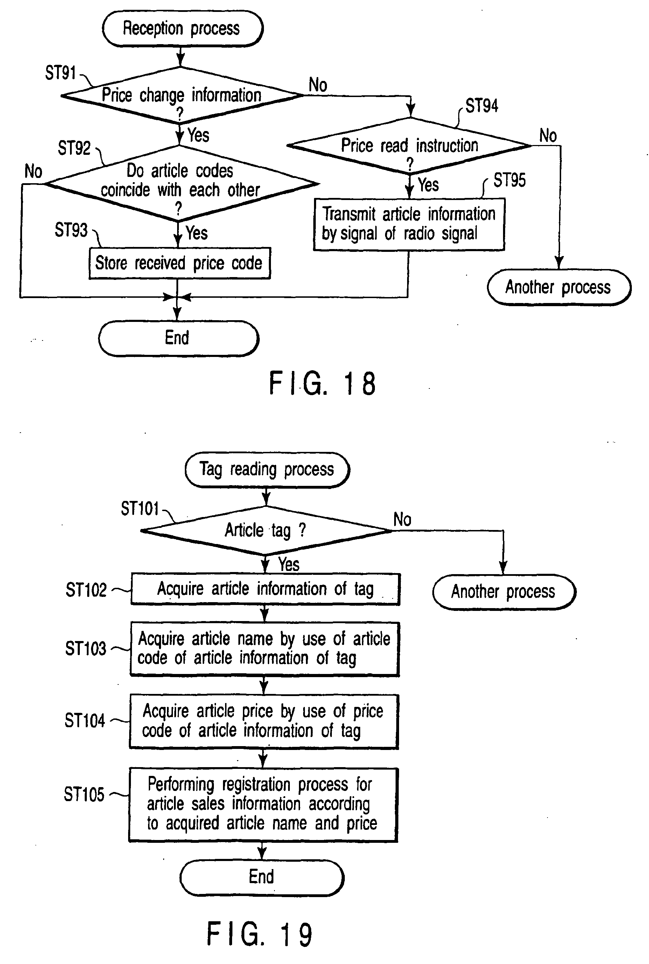

When the radio signal is received by the antenna 31, the radio tag 3 performs the reception process shown in the flowchart of FIG. 18.

The radio tag 3 demodulates the received radio signal. If the demodulated received radio signal corresponds to price change information (ST91), the radio tag 3 determines whether or not the article code in the information coincides with the article code stored in the memory 37 (ST92). When the article codes coincide with each other, the radio tag 3 rewrites the price code stored in the memory 37 to a price code in the price change information (ST93). If the article codes do not coincide with each other, the reception process is terminated.

On the other hand, if the article code in the price change information coincides with the article code stored in the memory, the price code stored in the memory is rewritten into the price code in the price change information (ST93).

If the demodulated received radio signal corresponds to a price reading instruction (ST94), the radio tag 3 reads out article information of a price code and article code stored in the memory 37. The price reading instruction is generated from the radio tag reader 15 connected to the POS terminal 14. The radio tag 3 modulates article information read from the memory 37 onto a radio signal and transmits the radio signal from the antenna 31 (ST95). Thus, the reception process is terminated.

When information stored in the memory 37 of the radio tag 3 is read by means of the radio tag reader 15, the POS terminal 14 performs the read process shown in the flowchart of FIG. 19.

The POS terminal 14 determines whether or not information of the radio tag 3 read by the radio tag reader 15 is information stored in the memory 37 of the radio tag 3 attached to the article 2 (ST101). If it is the information stored in the memory 37 of the radio tag 3, the POS terminal 14 acquires an article code and price code from the information (ST102).

The POS terminal 14 makes an inquiry at the store server 16 by use of the article code and price code to acquire an article name set in the article file 18 in correspondence to the article code and a selling price corresponding to the price code (ST103, ST104).

Further, the POS terminal 14 performs the registration process for sales information of the article whose article name is set based on the selling price acquired from the store server 16 (ST105). Thus, the tag reading process is terminated.

Like the first embodiment, in the second embodiment with the above configuration, a price change of an article whose price is changed according to a certain period of time can be correctly managed and the article can be adequately sold without imposing an additional load on a clerk.

The controller 12 can be omitted from the above embodiment and price change information can be directly transmitted from the store server 16 to each of the radio tag readers/writers 4-1 to 4-N. In this case, radio signal indicating price change information are simultaneously transmitted from the radio tag readers/writers 4-1 to 4-N. Therefore, there occurs a problem that radio signal are wastefully transmitted from the radio tag reader/writer on which the articles whose prices are to be changed are not displayed. However, if the articles of the same type are displayed on a plurality of article display racks, there is no chance of omission of price change.

In the above embodiments, when price-change time has reached, price change information is automatically transmitted from the store server 16. In another embodiment of this invention, price change information of an article whose price is to be temporarily changed by the manual operation of the operator can be transmitted from the store server 16.

In the above embodiments, when price change information containing the article code stored in the memory 37 is received by the radio tag 3, price information of the memory 37 is rewritten to price information of the price change information. In another embodiment of this invention, an inherent number such as a manufacturing number of the article is stored in the radio tag 3. Further, an inherent number such as a manufacturing number of the article can be contained in price change information. As a result, it is possible to change price information for each article. It is also possible to change price information in the same manner by using inherent ID which the radio tag 3 has.

The sales information process performed by the POS terminal 14 is not limited to the registration process and, for example, it may be applied to a return registration process performed when an article is returned.

## Claims

1. An article price management system which manages selling prices of articles having radio tags (3) attached thereto by use of a server (16), the system comprising
a radio tag reader writer (4-1 - 4-N) which deals with an article display place (1-1 - 1-N) in which the articles are displayed as a communication area with respect to the radio tags (3), the radio tag reader writer (4-1 - 4-N) comprising an antenna (5-1 - 5-N) for transmission of radio signals, wherein
the server (16) comprises communication means (17) for communicating with the radio/tag reader/writer (4-1 - 4-N), and
the radio tags (3) comprise a storage section (37) which stores an inherent ID assigned and set at the manufacturing stage of the radio tag and price information of an article to which the radio tag (3) is attached, and a receiving means (31) for receiving a radio signal transmitted from the antenna (5-1 - 5-N) of the radio tag reader/writer (4-1 - 4-N),
**characterized in that**
the server (16) further comprises
an article file (18) which stores information indicating names and normal prices of articles in association with article identification codes of the articles, a price change file (19) which stores information including an article identification code of an article whose price is to be changed, a price change time and a changed price,
clock means (20) for counting present time,
time determination means (ST7) for determining whether the present time has reached or exceeds a price change time stored in the price change file (19), and, if so, acquiring a corresponding article identification code and changed price information from the price change file (19), and
transmission control means (ST10) for transmitting price change information containing the article identification code and changed price information acquired by the time determination means (ST7) to the radio tag reader/writer (4-1 - 4-N) via the communication means,
the radio tag reader/writer (4-1 - 4-N) further comprises a transmission control means (ST32) for causing the antenna (5-1 - 5-N) to transmit the price change information received from the server (16), and
the radio tag (3) further stores, in the storage section (37), an article identification code of an article to which the radio tag (3) is attached, and the radio tag (3) further comprises a code determining means (ST42) for determining whether the article identification code contained in the price change information coincides with the article identification code stored in the storage section (37) when the radio signal received by the receiving means (31) is the price change information, and a price changing means (ST43) for changing the price information stored in the storage section (37) to price information contained in the price change information received by the receiving means (31) when the code determining means (ST42) determines that both of the article identification codes coincide with each other.

2. The system of claim 1, **characterized in that**
the radio tag reader/writer (4-1 - 4-N) comprises a plurality of radio tag readers/writers (4-1 - 4-N) which are respectively provided in a plurality of article display places (1-1 - 1-N) in which the articles are displayed, and deal with the article display places (1-1 - 1-N) as communication areas with respect to the respective radio tags,
the system further comprises a controller (12) which controls the radio tag readers/writers (4-1 - 4-N),
the communication means (17) of the server (16) communicates with the controller (12),
the article file (18) of the server (16) further stores place identification codes of the article display places (1-1 - 1-N) in which the articles are displayed, in association with the article identification codes of the articles,
the time determination means (ST7) of the server further acquires the place identification code stored in the article file (18) in association with the acquired article identification code,
the transmission control means (ST10) of the server (16) transmits price change information containing the article identification code, price information after the change of the price and the place identification code which are acquired by the time determination means (ST7), to the controller (12) via the communication means (17),
the controller (12) includes communication means (17) for communicating with the server (16), selecting means (ST23) for selecting one of the radio tag readers/writers (4-1 - 4-N) which is provided in the article display place (1-1 - 1-N) identified by the place identification code contained in price change information when the price change information is received via the communicating means (17), and relay means (ST24) for supplying the price change information to the radio tag reader/writer (4-1 - 4-N) selected by the selecting means (ST23), and
the transmission control means (ST32) causes the antenna (5-1 - 5-N) to transmit the price change information supplied form the controller (12).

3. The system according to claim 1 or 2, **characterized in that** the price change file (19) further stores price change times of the respective articles whose prices are to be changed in the order in which the prices thereof will be changed at earlier times and **in that** the time determining means is adapted to sequentially read of the price change times stored in the price change file compare the read price change times with the current time, and to terminate the determining process when a price change time which comes after the current time is read.

4. The article price management system according to claim 1 or 2, **characterized in that** price information stored in the storage section of the radio tag is a selling price of an article to which the radio tag is attached.

5. The article price management system according to claim 1 or 2, **characterized in that** price information stored in the storage section of the radio tag is a code corresponding to a selling price of an article to which the radio tag is attached.

6. The article price management system according to claim 1 or 2, **characterized by** further comprising a sales information processing apparatus (14) which processes sales information items of articles,
wherein the server further includes a second communicating means (17) for communicating with the sales information processing apparatus, and the sales information processing apparatus includes a reading means (15) for reading an article identification code and price information stored in the storage section of the radio tag attached to the article, and an information processing means (ST54) for processing sales information of an article identified based on the article identification code according to a selling price corresponding to price information when the reading means reads the article identification code and price information from the radio tag.

7. The article price management system according to claim 6, **characterized in that** price information stored in the storage section of the radio tag is a selling price of an article to which the radio tag is attached, and the information processing means of the sales information processing apparatus processes sales information of an article according to a selling price read from the radio tag by the reading means.

8. The article price management system according to claim 6, **characterized in that** price information stored in the storage section of the radio tag is a code corresponding to a selling price of an article to which the radio tag is attached, and the information processing means of the sales information processing apparatus acquires a sales price corresponding to a code read from the radio tag by the reading means and processes sales information of the article according to the selling price.

## Patentansprüche

1. System zur Verwaltung von Artikelverkaufspreisen, das Verkaufspreise von Artikeln mit angebrachten Funketiketten (3) unter Benutzung eines Servers (16) verwaltet, das System aufweisend
einen Funketiketteleser/Schreiber (4-1-4-N), der mit einem Artikelausstellungsort (1-1 - 1-N), in dem die Artikel ausgestellt werden, als ein Kommunikationsbereich bezüglich der Funketiketten (3) interagiert, und der eine Antenne (5-1- 5-N) zur Übertragung von Radiosignalen aufweist, wobei
der Server (16) Kommunikationsmittel (17) zur Kommunikation mit dem Funk/Etiketteleser/Schreiber (4-1 - 4-N) aufweist, und
die Funketiketten (3) einen Speicherbereich (37) zum Speichern einer eigenen bei der Herstellung der Funketikette zugeordneten und eingestellten ID und von Verkaufspreisinformation eines Artikels, an dem die Funketikette (3) angebracht ist, und ein Empfangsmittel (31) zum Empfangen eines übertragenen Radiosignals von der Antenne (5-1 - 5-N) des Funketiketteleser/Schreiber (4-1 - 4-N) aufweisen,
**dadurch gekennzeichnet, dass**
der Server (16) ferner aufweist
eine Artikeldatei (18), die Information über Namen und normale Verkaufspreise der Artikel in Zuordnung mit Artikelidentifizierungscodes der Artikel speichert,
eine Verkaufspreisänderungsdatei (19), die Information über einen Artikelidentifizierungscode eines Artikels, dessen Verkaufspreis zu ändern ist, eine Verkaufspreisänderungszeit und einen geänderten Preis speichert,
Uhrmittel (20) zum Zählen der gegenwärtigen Zeit,
Zeitbestimmungsmittel (ST7) zum Bestimmen, ob die gegenwärtige Zeit eine in der Verkaufspreisänderungsdatei (19) gespeicherte Verkaufspreisänderungszeit erreicht hat oder überschreitet, und, wenn ja, zum Erfassen eines zugehörigen Artikelidentifizierungscodes und geänderter Verkaufspreisinformation von der Verkaufspreisänderungsdatei (19), und
Übertragungssteuermittel (ST10) zum Übertragen von Verkaufspreisänderungsinformation über den Artikelidentifizierungscode und geänderte Verkaufspreisinformation, die vom Zeitbestimmungsmittel (ST7) erfasst wurden, zum Funketiketteleser/Schreiber (4-1 - 4-N) mittels des Kommunikationsmittels,
der Funketiketteleser/Schreiber (4-1 - 4-N) ferner ein Übertragungssteuermittel (ST32) aufweist zum Bewirken, dass die Antenne (5-1 - 5-N) die vom Server (16) empfangene Verkaufspreisänderungsinformation überträgt, und
die Funketikette (3) ferner in der Speichereinheit (37) einen Artikelidentifizierungscode eines Artikels, an dem die Funketikette (3) angebracht ist, speichert, und die Funketikette (3) ferner aufweist ein Codebestimmungsmittel (ST42) zum Bestimmen, ob der in der Verkaufspreisänderungsinformation enthaltene Artikelidentifizierungscode mit dem im Speicherbereich (37) gespeicherten Artikelidentifizierungscode übereinstimmt, falls das vom Empfangsmittel (31) empfangene Radiosignal die Verkaufspreisänderungsinformation ist, und ein Verkaufspreisveränderungsmittel (ST43) zum Verändern der im Speicherbereich (37) gespeicherten Verkaufspreisinformation in Verkaufspreisinformation beinhaltet in der vom Empfangsmittel (31) empfangenen Verkaufspreisinformation, falls das Codebestimmungsmittel (ST42) bestimmt, dass beide Artikelidentifizierungscodes miteinander übereinstimmen.

2. System nach Anspruch 1, **dadurch gekennzeichnet, dass**
der Funketiketteleser/Schreiber (4-1 - 4-N) eine Mehrzahl von Funketikettelesern/Schreibern (4-1 - 4-N) aufweist, die entsprechend in einer Mehrzahl von Artikelausstellungsorten (1-1 - 1-N), in denen die Artikel ausgestellt werden, vorgesehen sind und mit den Artikelausstellungsorten (1-1 - 1-N) als Kommunikationsbereiche bezüglich der zugehörigen Funketiketten interagieren,
das System ferner eine Steuerung (12) aufweist, die die Funketiketteleser/Schreiber (4-1 - 4-N) steuert,
das Kommunikationsmittel (17) des Servers (16) mit der Steuerung (12) kommuniziert,
die Artikeldatei (18) des Servers (16) ferner Ortidentifizierungscodes der Artikelausstellungsorte (1-1 - 1-N), in denen die Artikel ausgestellt werden, in Zuordnung mit den Artikelidentifizierungscodes der Artikel speichert,
das Zeitbestimmungsmittel (ST7) des Servers ferner den Ortidentifizierungscode gespeichert in der Artikeldatei (18) in Zuordnung mit dem erfassten Artikelidentifizierungscode erfasst,
das Übertragungskontrollmittel (ST10) des Servers (16) Preisänderungsinformation beinhaltend den Artikelidentifizierungscode, Verkaufspreisinformation nach der Änderung des Verkaufspreises und den Ortidentifzierungscode, die von dem Zeitbestimmungsmittel (ST7) erfasst werden, zur Steuerung (12) mittels des Kommunikationsmittels (17) überträgt,
die Steuerung (12) Kommunikationsmittel (17) zum Kommunizieren mit dem Server (16), Auswahlmittel (ST23) zum Auswählen eines der Funketiketteleser/Schreiber (4-1 - 4-N), der im Artikelausstellungsort (1-1 - 1-N), der durch den Ortidentifzierungscode beinhaltet in der Verkaufspreisänderungsinformation identifziert ist, falls die Verkaufspreisänderungsinformation über das Kommunikationsmittel (17) empfangen ist, und Weiterleitungsmittel (ST24) zum Liefern der Verkaufspreisänderungsinformation an den über das Auswahlmittel (ST23) ausgewählten Funketiketteleser/Schreiber (4-1 - 4-N) aufweist, und
das Übertragungssteuermittel (ST32) bewirkt, dass die Antenne (5-1 - 5-N) die von der Steuerung (12) gelieferte Verkaufspreisänderungsinformation überträgt.

3. System nach Anspruch 1 oder 2, **dadurch gekennzeichnet, dass** die Verkaufspreisänderungsdatei (19) ferner Preisänderungszeiten der zugehörigen Artikel speichert, deren Preise zu ändern sind in der Reihenfolge, in der die Preise zu einer früheren Zeit geändert werden, und dass das Zeitbestimmungsmittel dazu ausgebildet ist die in der Verkaufspreisänderungsdatei gespeicherten Preisänderungszeiten sequentiell zu lesen, die gelesenen Preisänderungszeiten mit der vorliegenden Zeit zu vergleichen und den Bestimmungsprozess zu beenden, wenn eine Preisänderungszeit, die nach der vorliegenden Zeit kommt, gelesen wird.

4. System nach Anspruch 1 oder 2, **dadurch gekennzeichnet, dass** die im Speicherbereich der Funketikette gespeicherte Preisinformation ein Verkaufspreis eines Artikels, an dem die Funketikette (3) angebracht ist, ist.

5. System nach Anspruch 1 oder 2, **dadurch gekennzeichnet, dass** die im Speicherbereich der Funketikette gespeicherte Preisinformation ein Code ist, der mit einem Verkaufspreis eines Artikels, an dem die Funketikette (3) angebracht ist, korrespondiert.

6. System nach Anspruch 1 oder 2, ferner mit einer Angebotsinformationsverarbeitungsvorrichtung (14), die Verkaufsinformationsaspekte von Artikeln verarbeitet,
wobei der Server ferner ein zweites Kommunikationsmittel zum Kommunizieren mit der Angebotsinformationverarbeitungsvorrichtung enthält, und die Angebotsinformationverarbeitungsvorrichtung enthält ein Lesemittel (15) zum Lesen eines Artikelidentifizierungscodes und von Preisinformation, die im Speicherbereich der am Artikel angebrachten Funketikette gespeichert sind, und ein Informationsverarbeitungsmittel (ST54) zum Verarbeiten von Angebotsinformation eines Artikels, der identifiziert ist basierend auf dem Artikelidentifizierungscodes gemäß eines preisinformationsentsprechenden Verkaufspreises, wenn das Lesemittel den Artikelidentifizierungscode und die Preisinformation von der Funketikette liest.

7. System nach Anspruch 6, **dadurch gekennzeichnet, dass** die im Speicherbereich der Funketikette gespeicherte Preisinformation ein Verkaufspreis eines Artikels, an dem die Funketikette (3) angebracht ist, und das Informationsverarbeitungsmittel der Angebotsinformationsverarbeitungsvorrichtung Angebotsinformation eines Artikels gemäß einem Verkaufspreis, der von der Funketikette mit dem Lesemittel gelesen wurde, verarbeitet.

8. System nach Anspruch 6, **dadurch gekennzeichnet, dass** die im Speicherbereich der Funketikette gespeicherte Preisinformation ein Code ist, der mit einem Verkaufspreis eines Artikels, an dem die Funketikette (3) angebracht ist, korrespondiert, und das Informationsverarbeitungsmittel der Angebotsinformationsverarbeitungsvorrichtung einen Angebotspreis, der von der Funketikette mit dem Lesemittel gelesen wurde, erfasst und Angebotsinformation des Artikels gemäß dem Verkaufspreis verarbeitet.

## Revendications

1. Système de gestion de prix d'articles qui gère des prix de vente d'articles possédant des étiquettes radio (3) en utilisant un serveur (16), système comportant
un dispositif de lecture/écriture d'étiquettes radio (4-1 - 4-N) qui concerne une place d'affichage d'article (1-1 - 1-N) où les articles sont affichés comme zone de communication concernant les étiquettes radio (3), le dispositif d'écriture/lecture d'étiquettes radio (4-1 - 4-N) comportant une antenne (5-1 - 5-N) pour transmettre des signaux radio, dans lequel
le serveur (16) comporte un moyen de communication (17) pour communiquer avec le dispositif de lecture/écriture d'étiquettes radio (4-1 - 4-N), et
les étiquettes radio (3) comportent une section de stockage (37) qui mémorise une ID inhérente assignée et déterminée à l'étape de fabrication de l'étiquette radio et une information de prix d'un article auquel l'étiquette radio (3) est fixée, et un moyen de réception (31) pour recevoir un signal radio transmis depuis l'antenne (5-1 - 5-N) du dispositif d'écriture/lecture d'étiquettes radio (4-1 - 4-N),
**caractérisé en ce que**
le serveur (16) comporte en outre
un fichier d'article (18) qui mémorise une information indiquant les noms et les prix normaux des articles en association avec les codes d'identification d'article des articles,
un fichier de changement de prix (19) qui mémorise une information comprenant un code d'identification d'article d'un article dont le prix doit être changé, un temps de changement de prix et un prix changé,
un moyen d'horloge (20) pour compter le temps réel,
un moyen de détermination de temps (ST7) pour déterminer si le temps réel a atteint ou dépassé un temps de changement de prix mémorisé dans le fichier de changement de prix (19), et, si c'est le cas, acquérir un code d'identification d'article correspondant et une information de prix changé depuis le fichier de changement de prix (19), et
un moyen de contrôle de transmission (ST10) pour transmettre une information de changement de prix contenant le code d'identification d'article et l'information de prix changé acquise par le moyen de détermination de temps (ST7) au dispositif d'écriture/lecture d'étiquettes radio (4-1 - 4-N) par l'intermédiaire du moyen de communication,
le dispositif d'écriture/lecture d'étiquettes radio (4-1 - 4-N) comporte en outre un moyen de contrôle de transmission (ST32) pour amener l'antenne (5-1 - 5-N) à transmettre l'information de changement de prix reçue depuis le serveur (16), et
l'étiquette radio (3) mémorise en outre, dans la section de stockage (37), un code d'identification de l'article d'un article auquel l'étiquette radio (3) est fixée, et l'étiquette radio (3) comporte en outre un moyen de détermination de code (ST42) pour déterminer si le code d'identification d'article contenu dans l'information de changement de prix coïncide avec le code d'identification d'article mémorisé dans la section de stockage (37) lorsque le signal radio reçu par le moyen de réception (31) est l'information de changement de prix, et un moyen de changement de prix (ST43) pour changer l'information de prix mémorisée dans la section de stockage (37) en information de prix contenue dans l'information de changement de prix reçue par le moyen de réception (31) lorsque le moyen de détermination de code (ST42) détermine que les deux codes d'identification d'article coïncident l'un avec l'autre.

2. Système selon la revendication 1, **caractérisé en ce que**
le dispositif d'écriture/lecture d'étiquettes radio (4-1 - 4-N) comporte une pluralité de dispositifs d'écriture/lecture d'étiquettes radio (4-1 - 4-N) qui sont respectivement prévus dans une pluralité de places d'affichage d'article (1-1 - 1-N) où les articles sont affichés, et concerne des places d'affichage d'article (1-1 - 1-N) en tant que zones de communication concernant les étiquettes radio respectives,
le système comporte en outre un contrôleur (12) qui contrôle les dispositifs d'écriture/lecture d'étiquettes radio (4-1 - 4-N),
le moyen de communication (17) du serveur (16) communique avec le contrôleur (12),
le fichier d'article (18) du serveur (16) mémorise en outre des codes d'identification de place des places d'affichage d'article (1-1 - 1-N) où les articles sont affichés, en association avec les codes d'identification d'article des articles,
le moyen de détermination de temps (ST7) du serveur acquiert en outre le code d'identification de place mémorisé dans le fichier d'article (18) en association avec le code d'identification d'article acquis,
le moyen de contrôle de transmission (ST10) du serveur (16) transmet une information de changement de prix contenant le code d'identification d'article, l'information de prix après le changement de prix et le code d'identification de place qui sont acquis par le moyen de détermination de temps (ST7), au contrôleur (12) par l'intermédiaire du moyen de communication (17),
le contrôleur (12) comprend un moyen de communication (17) pour communiquer avec le serveur (16), un moyen de sélection (ST23) pour sélectionner un des dispositifs d'écriture/lecture d'étiquettes radio (4-1 - 4-N) qui est prévu dans la place d'affichage d'article (1-1 - 1-N) identifiée par le code d'identification de place contenu dans l'information de changement de prix lorsque l'information de changement de prix est reçue par l'intermédiaire du moyen de communication (17), et un moyen de relais (ST24) pour délivrer l'information de changement de prix au dispositif d'écriture/lecture d'étiquettes radio (4-1 - 4-N) sélectionné par le moyen de sélection (ST23), et
le moyen de contrôle de transmission (ST32) amène l'antenne (5-1 - 5-N) à transmettre l'information de changement de prix délivrée depuis le contrôleur (12).

3. Système selon la revendication 1 ou 2, **caractérisé en ce que** le fichier de changement de prix (19) mémorise en outre des temps de changement de prix des articles respectifs dont les prix doivent être changés dans l'ordre dans lequel les prix de ceux-ci seront changés plus tôt et **en ce que** le moyen de détermination de temps est adapté pour lire séquentiellement les temps de changement de prix mémorisés dans le fichier de changement de prix, comparer les temps de changement de prix lus avec le temps réel, et déterminer le processus de détermination lorsqu'un temps de changement de prix qui vient après le temps réel est lu.

4. Système de gestion de prix d'article selon la revendication 1 ou 2, **caractérisé en ce que** l'information de prix mémorisée dans la section de stockage de l'étiquette radio est un prix de vente d'un article auquel l'étiquette radio est fixée.

5. Système de gestion de prix d'article selon la revendication 1 ou 2, **caractérisé en ce qu'**une information de prix mémorisée dans la section de stockage de l'étiquette radio est un code correspondant à un prix de vente d'un article auquel l'étiquette radio est fixée.

6. Système de gestion de prix d'article selon la revendication 1 ou 2, **caractérisé en ce qu'**il comporte en outre un appareil de traitement d'information de vente (14) qui traite les éléments d'information de vente des articles,
dans lequel le serveur comprend en outre un second moyen de communication (17) pour communiquer avec l'appareil de traitement d'information de vente, et l'appareil de traitement d'information de vente comprend un moyen de lecture (15) pour lire un code d'identification d'article et une information de prix mémorisée dans la section de stockage de l'étiquette radio fixée à l'article, et un moyen de traitement d'information (ST54) pour traiter une information de vente d'un article identifié en fonction du code d'identification d'article conformément à un prix de vente correspondant à une information de prix lorsque le moyen de lecture lit le code d'identification d'article et l'information de prix à partir de l'étiquette radio.

7. Système de gestion de prix d'article selon la revendication 6, **caractérisé en ce que** l'information de prix mémorisée dans la section de stockage de l'étiquette radio est un prix de vente d'un article auquel l'étiquette radio est attachée, et le moyen de traitement d'information de l'appareil de traitement d'information de vente traite l'information de vente d'un article conformément à un prix de vente lu à partir de l'étiquette radio par le moyen de lecture.

8. Système de gestion de prix d'article selon la revendication 6, **caractérisé en ce que** l'information de prix mémorisée dans la section de stockage de l'étiquette radio est un code correspondant à un prix de vente d'un article auquel l'étiquette radio est fixée, et le moyen de traitement d'information de l'appareil de traitement d'information de vente acquiert un prix de vente correspondant à un code lu à partir de l'étiquette radio par le moyen de lecture et traite l'information de vente de l'article conformément au prix de vente.
